# EUROPEAN PATENT SPECIFICATION

(11) **EP 1 497 586 B1**
(45) Date of publication and mention of the grant of the patent: **14.02.2007**
(21) Application number: 03725323.4
(22) Date of filing: 17.04.2003
(51) Int. Cl.: F16M 13/04, F16M 11/06, G03B 17/56

(54) **ARTICLE MOUNTING**
OBJEKTHALTERUNG
MONTAGE D'ARTICLE

(30) Priority: 19.04.2002 GB 0208977
(43) Date of publication of application: 19.01.2005
(73) Proprietor: Smith, Howard James, Cheshire SK5 7LW (GB)
(72) Inventor: Smith, Howard James, Cheshire SK5 7LW (GB)
(74) Representative: Barker, Rosemary Anne
(86) International application number: PCT/GB2003/001653
(87) International publication number: WO 2003/089835

(56) References cited:
- WO-A-99/41540
- FR-A- 1 014 819
- FR-A- 2 222 730
- US-A- 2 364 363
- US-A- 3 064 547
- US-A- 5 797 054
- US-A- 5 963 749

## Description

This invention relates to an arrangement for mounting of an article such as a camera in such manner that the article/camera is selectively rotatable about an axis.

In particular but not exclusively the present invention is concerned with the mounting of cameras in such manner as to assist in the stabilising of cameras during the use thereof by enabling the camera to be rotated or rolled about a predetermined axis.

Whilst the present specification will discuss the features of the invention and its mode of use in relation to the positioning of a camera it is to be understood that the apparatus and features of the invention can well he used in other applications in which it is desired to be able to displace an article in a similar manner.

US 5,963,149 discloses an arrangement for mounting a camera in such manner that the camera can be supported at a location below its centre of gravity whilst enabling relative rotation between a support arrangement for the camera and the camera itself about a predetermined axis.

In one embodiment the support arrangement for the camera includes an annular/cylindrical first cage/framework rotatable with respect to a second cage/framework, the first cage/framework including part of a geared drive for rotatably engaging with a part of the geared drive provided on the second cage/framework.

The known arrangement can be mounted upon a column type support unit.

An object of the invention is to provide an adjustable level article support unit for a camera support assembly as herein before mentioned which includes telescopically engageable elongate post sections which are so arranged for adjustment relative to each other that adjustment of other apparatus/articles mounted thereto is avoided or, when necessary, facilitated.

Preferably, the telescopic arrangement is such that variation in the length of the support unit is possible from opposite ends of the main section.

According to the invention such an adjustable support unit is specified in claim 1.

Preferably the diameters of the the first and second post sections are such as to allow the third post section telescopically to enter into the second post section when the former is fully telescopically engaged into the first post section from a direction opposite to that of the second post section into the main post section so as to facilitate as short as possible fully telescoped relationship between the post sections.

For a better understanding of the invention and to show how to carry the same into effect reference will now be made to the accompanying drawings in which;
Figure 1A schematically illustrates an adjustable article support unit incorporating the concepts of the invention when in an extended article support setting;
Figure 2A schematically illustrates the support unit of Figure 1 when in its minimum length setting;
Figure 3A illustrates to an enlarged scale the telescopic sections used in the support unit of Figures 1 and 2;
Figure 4A illustrates in exploded view details of a lower end fitting for locking the telescopic sections in a required relative position;
Figure 5A illustrates in exploded view details of two forms of end fittings for enabling the positioning of post sections and for attachment of the support unit to a support or other article;
Figure 6A illustrates in exploded view details of an upper end fitting for locking the telescopic post sections in a required position; and
Figure 7A illustrates in elevation a further detail of an end fitting for the mounting of a camera to the uppermost telescopic post section.

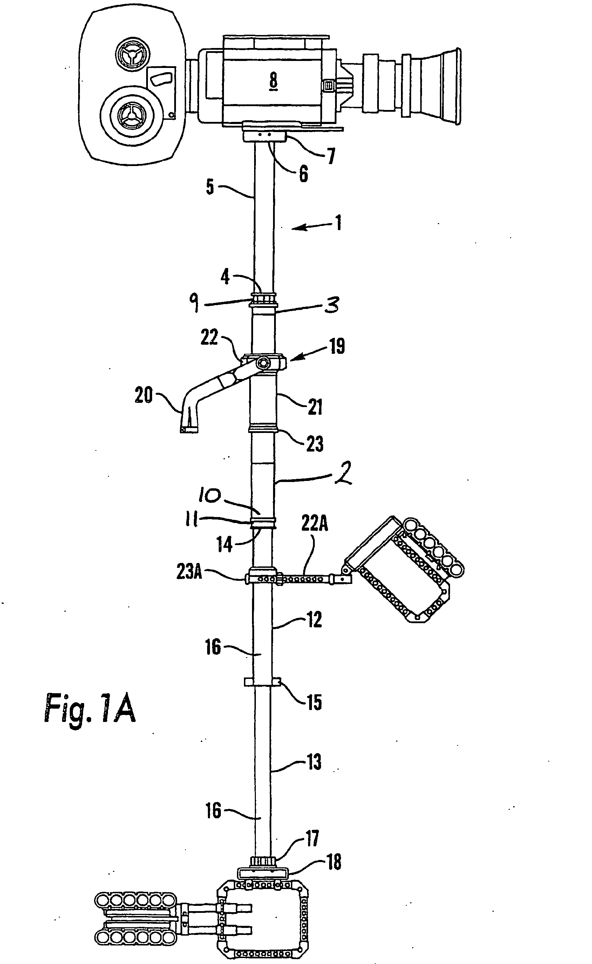

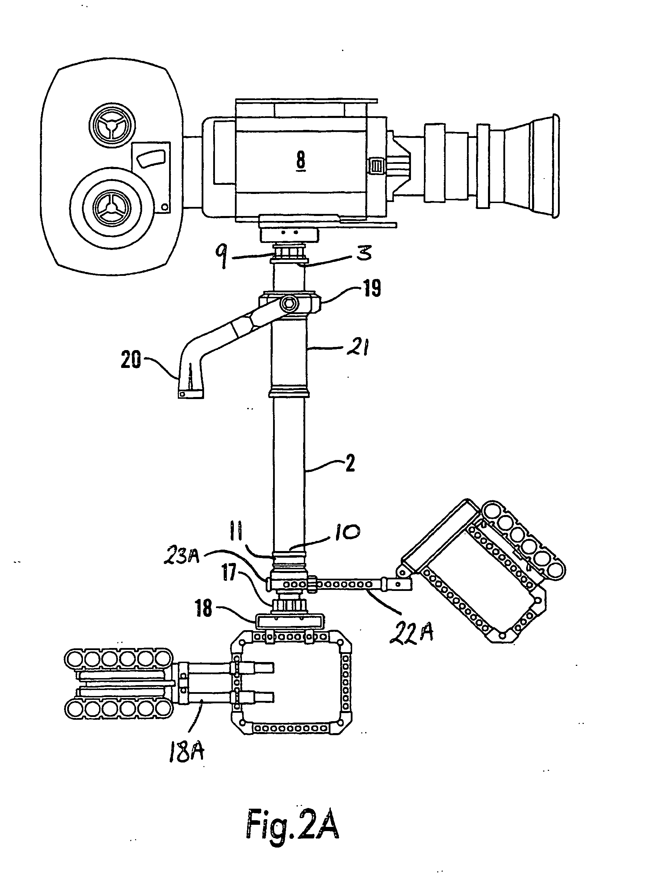

Referring now to the drawings and more particularly to Figures 1A and 2A the adjustable level support unit 1 shown therein includes a main/first post section 2 adapted at its upper end 3 telescopically to receive the lower end 4 of a second post section 5. The upper end 6 of the post section 5 is provided with an end fitting 7 by means of which the article to be supported i.e., a camera or the like 8 can be connected to the platform 7 for the purposes of use. This end fitting will be discussed hereinafter

A rotatable clamp element 9 is provided at the upper end 3 of the first post section 2 for the purposes of locking the second post section 5 at a required lengthways position with respect to the first section 2. This clamp unit 9 is adapted for exerting a clamping action upon the outer surface of the post section 5 that telescopically engages therewith and will be further discussed hereinafter.

The lower end 10 of the first post section 2 is provided with a connection element 11 by means of which a third and fourth telescopically engageable post sections 12 and 13 respectively are connectable in extension of the post sections 2 and 5. This connection element 11 will be discussed hereinafter.

The upper end 14 of the of the third post section 12 is adapted to connect with the connection element 11.

A rotatable clamp element 15 is provided at the lower end 16 of the third post section 12 for the purposes of locking the fourth post section 13 at a required lengthways position with respect to the third post section 12. This clamp unit 15 is conveniently similar to that provided at the lower end 10 of the first post section 2. The lower end 16 of the fourth post section 13 is adapted to receive an adapter unit 17 whereby the assembly of the four post sections 2, 5, 12, and 13 can be connected to a base unit 18 in such manner that the assembly of the four post sections is upstanding from the base unit. Alternatively apparatus associated with the operation of the camera unit 8 may be connected to the lower end of the bottom post section 13.

Articles can be carried from the post sections as indicated in the Figures. As shown one such article is carried from an arm 22A connected to a clamping unit 23A provided upon the section 12. In the Figures the arm 22A is shown connected to the third section 12. With this arrangement it should be noted that when the four sections are telescoped to the position shown in Figure 2 A the clamping unit 23A for the arm can be positioned at the lower end of the associated section 12.

When the support unit 1 is intended to be part of a user body mounted stabilisation device the support unit is carried from a support harness or vest (not shown) worn by the user of the camera by way of a gimbals unit 19 incorporating a carrying handle 20.

This gimbals unit 19 includes a sleeve 21 having at its upper end a mounting 22 for the handle structure 20 that is pivoted to the mounting 22. The mounting 22 allows the sleave 21 to rotate about the longitudinal axis of the support unit and is mounted to the outermost section 2 at a position that is effectively at the centre of balance of the support unit 1 when carrying the camera 8 and any other form of load such as is indicated in the Figures. The sleeve 21 is locked in a required position lengthways of the post section 2 by a locking ring 23.

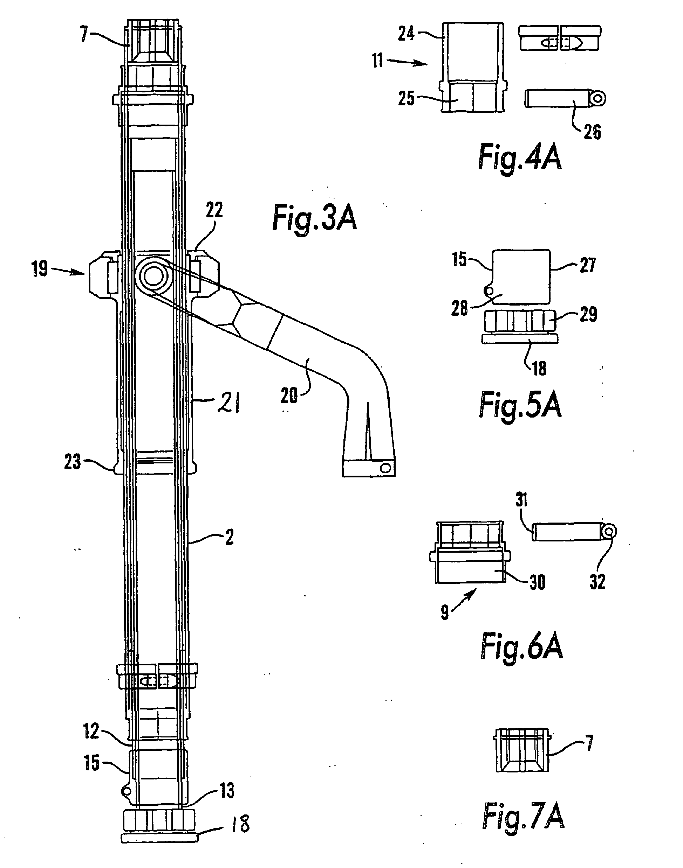

Figure 4A illustrates in detail the attachment unit 11. The latter includes a sleeve part 24 that is engageable with the lower end of the post section 2. The lower end of the sleeve comprises a ring of 'fingers' 25 that are clamped towards the post section 12 by a clamping ring 26.

The connection unit 15 is illustrated in the upper part of Figure 5A and includes a sleeve part 27 attached to the lower end of the post section 12 and having a clamping part 28 extending therefrom adapted to be able to clamp against the post section 13 on rotation of a locking element 29. The lower part of Figure 5A illustrates the base member 18 and as shown comprises a ring member at the lower end of the post section 13 and intended to threadably engage with an upstanding threaded part provided upon an article it is required to attach to the lower end of the post section 13. The element 9 is schematically illustrated in Figure 6A and includes a sleeve member 30 secured to the upper end of the post section 2 that is provided with 'fingers' that are caused to clamp against the post section 5 by means of a clamp ring 31 with its locking element 32.

The platform 7 can comprise a sleeve secured to the upper end 6 of the post section 5 having a threaded part which enables a camera or other article to be secured to the post section. This sleeve can provide for the mounting of the platform previously mentioned..

The figures illustrate the mounting of such additional articles to the support unit 1 at the lowermost end thereof as shown at 18A.

It will be understood that with the above discussed adjustable support unit lengthways telescopic adjustment is possible from opposite ends of the main section 2. In practice this means that the level of the article/camera mounted to the platform 7 relative to the carrying gimbals/handle 20 can be set to suit the convenience of the user and that if it should be desired to mount the support unit to an actual base support such as a camera stabilising platform (such stabilising platforms are known under trade names such as 'steadicam' and sled platforms) the settings of the telescopic sections 12 and 13 can be set so that the camera 8 when so mounted is at a required level. With this arrangement the camera can remain level wise set for user carrying use upon removal from the stabilising platform without the need for resetting adjustments.

The additional articles can be elements such as batteries for the camera, monitors for enabling communication between the user of the support unit and a remote source of information relevant to the use of the camera.

## Claims

1. An arrangement for mounting an article/apparatus/camera (8) in such manner that the article can be supported at a location below its centre of gravity whilst enabling relative rotation between a support arrangement for the article/apparatus/camera and the article/apparatus/camera about a predetermined axis, **characterised by** the mounting of such an arrangement onto a telescopically adjustable support unit (1) including a first elongate post section (2), a second elongate post section (5) connected at one end (6) to said arrangement and having its other end (4) telescopically interengaged into one end of the first post section (2), a third elongate post section (12) adapted at one end (14) thereof telescopically to engage in the other end (10) of the first post section (2) and a fourth elongate post section (13) adapted at one end telescopically to engage in the other end of the third post section (12) and at its other end to engage means (17, 18) for supporting a load therefrom, and gimbals means (19) mounted intermediate of the ends of the first post section (2) for enabling the support unit (1) itself to be manually supported whilst permitting pivotal movement of the support unit.

2. An arrangement according to claim 1 wherein the gimbals means (19) includes a sleeve (21) movable lengthways of the first post section (2) and lockable thereto into a desired position lengthways of the first post section (2).

3. An arrangement according to claim 1 or claim 2 wherein the gimbals means (19) includes a pivotally mounted support handle (20) or the like.

4. An arrangement according to claims 1, 2 or 3 wherein the diameters of the first and second post sections (2, 5) are such as to allow the third post section (12) telescopically to enter into the second post section (5) when the former is fully telescopically engaged into the first post section (2) from a direction opposite to that of the second post section (5) into the first post section.

## Patentansprüche

1. Anordnung zur Halterung eines Objekts / Gerätes / einer Kamera (8) derart, dass das Objekt an einem Ort unterhalb seines Schwerpunkts gestützt werden kann, während eine relative Drehung zwischen einer Stützanordnung für das Objekt / Gerät / die Kamera und dem Objekt / Gerät / der Kamera um eine vorgegebene Achse ermöglicht wird, **dadurch gekennzeichnet, dass** die Halterung einer solchen Anordnung auf einer teleskopartig anpassbaren Stützeinheit (1) einen ersten länglichen Säulenabschnitt (2), einen zweiten länglichen Säulenabschnitt (5), der an einem Ende (6) mit der genannten Anordnung verbunden ist und dessen anderes Ende (4) teleskopartig in ein Ende des ersten Säulenabschnitts (2) hinein ineinandergreift, einen dritten länglichen Säulenabschnitt (12), der an seinem einen Ende (14) daran angepasst ist, um mit einem anderen Ende (10) des ersten Säulenabschnitts (2) teleskopartig ineinander zu greifen und einen vierten länglichen Säulenabschnitt (13), der daran angepasst ist, um an einem Ende teleskopartig mit einem anderen Ende des dritten Säulenabschnitts (12) ineinander zu greifen und um an seinem anderen Ende mit Mitteln (17, 18) zur Auflage einer Last darauf einzugreifen, und kardanische Mittel (19) aufweist, die zwischen den Enden des ersten Säulenabschnitts (2) befestigt sind, um zu ermöglichen, dass die Stützeinheit (1) mit der Hand gestützt werden kann, während eine Schwenkbewegung der Stützeinheit erlaubt wird.

2. Eine Anordnung gemäß Anspruch 1, wobei die kardanischen Mittel (19) eine Buchse (21) aufweist, die beweglich längs des ersten Säulenabschnitts (2) und in einer gewünschten Position längs des ersten Säulenabschnitts (2) festlegbar ist.

3. Anordnung gemäß Anspruch 1 oder Anspruch 2, wobei die kardanischen Mittel (19) einen schwenkbar gelagerten Stützgriff (20) oder dergleichen aufweisen.

4. Anordnung gemäß einem der Ansprüche 1, 2 oder 3, wobei die Durchmesser des ersten Säulenabschnitts und des zweiten Säulenabschnitts (2, 5) so sind, dass es dem dritten Säulenabschnitts (12) möglich ist, teleskopisch in den zweiten Säulenabschnitt (5) einzudringen, wenn der Erstere vollständig teleskopisch von einer Richtung in den ersten Säulenabschnitt (2) eingreift, die entgegengesetzt zu der des zweiten Säulenabschnitts (5) in den ersten Säulenabschnitt (2) hinein ist.

## Revendications

1. Arrangement pour le montage d'un article/appareil/caméra (8) de telle manière que l'article peut être supporté à une position en dessous de son centre de gravité tout en permettant une rotation relative entre un arrangement support pour l'article/appareil/caméra et l'article/appareil/caméra autour d'un axe prédéterminé, **caractérisé par** le montage d'un tel arrangement sur une unité support réglable de manière télescopique (1) incluant une première partie de montant allongée (2), une seconde partie de montant allongée (5) connectée à une extrémité (6) audit arrangement et ayant son autre extrémité (4) inter engagée de manière télescopique dans une extrémité de la première partie de montant (2), une troisième partie de montant allongée (12) dont une extrémité (14) est adaptée à s'engager de manière télescopique dans l'autre extrémité (10) de la première partie de montant (2) et une quatrième partie de montant allongée (13) dont une extrémité est adaptée à s'engager de manière télescopique dans l'autre extrémité de la troisième partie de montant (12) et à son autre extrémité à engager des moyens (17, 18) pour supporter une charge de ceux-ci, des moyens de cardans (19) montés de manière intermédiaire entre les extrémités de la première partie de montant (2) pour permettre à l'unité support (1) elle-même d'être supportée manuellement tout en permettant un mouvement de pivotement de l'unité support.

2. Arrangement selon la revendication 1, dans lequel les moyens de cardans (19) incluent un manchon (21) déplaçable le long de la première partie de montant (2) et verrouillable à celle-ci dans une position longitudinale désirée de la première partie de montant (2).

3. Arrangement selon la revendication 1 ou la revendication 2, dans lequel les moyens de cardans (19) incluent une poignée support montée de manière pivotante (20) ou similaire.

4. Arrangement selon les revendications 1, 2 ou 3, dans lequel les diamètres des premières et secondes parties de montant (2, 5) sont de façon à permettre à la troisième partie de montant (12) d'entrer de manière télescopique dans la seconde partie de montant (5) quand la précédente est engagée de manière totalement télescopique dans la première partie de montant (2) depuis une direction opposée à celle de la seconde partie de montant (5) dans la première partie de montant.
